# EUROPEAN PATENT APPLICATION

(11) **EP 4 524 574 A1**
(43) Date of publication of application: **19.03.2025**
(21) Application number: 23803598.4
(22) Date of filing: 11.05.2023
(51) Int. Cl.: G01N 35/00, B01D 61/00, B01D 63/02

(54) **CHEMICAL ANALYSIS DEVICE**

(30) Priority: 13.05.2022 JP 2022079636
(71) Applicant: DIC Corporation, Tokyo 174-8520 (JP)
(72) Inventor: KOBAYASHI, Atsuo, Ichihara-shi, Chiba 290-8585 (JP); SUGANUMA, Youhei, Ichihara-shi, Chiba 290-8585 (JP); OI, Kazumi, Ichihara-shi, Chiba 290-8585 (JP)
(74) Representative: TBK
(86) International application number: PCT/JP2023/017680
(87) International publication number: WO 2023/219124

(57) **Abstract**

There is provided a chemical analyzer equipped with a hollow fiber degassing module that can maintain the original excellent degassing performance even after long periods of continuous use, and can also suppress the proliferation of bacteria and the like. More specifically, a hollow fiber degassing module 20A includes a housing 210 and a hollow fiber membrane 220 disposed in an internal space S1 of the housing. The housing 210 includes a liquid supply unit 216A for connecting an outside of the housing 210 and an internal space S2 of the hollow fiber membrane 220 to each other, and for supplying constant temperature water W1 from an outside of the housing 210 to an internal space S2 of the hollow fiber membrane 220, a liquid discharge unit 217A for connecting the internal space S2 of the hollow fiber membrane 220 and the outside of the housing 210 to each other, and for discharging constant temperature water W2 degassed from the internal space S2 of the hollow fiber membrane 220 to the outside of the housing 210, and a gas discharge unit 218A for connecting an internal space S1 of the housing 210 and the outside of the housing 210 to each other, and for depressurizing the internal space S1 of the housing 210. A chemical analyzer 2A further includes a heating unit 219A provided in the gas discharge unit 218A.

## Description

### TECHNICAL FIELD

The present invention relates to a chemical analyzer.

### BACKGROUND ART

The chemical analyzer includes a degassing module having a hollow fiber membrane, and the degassing module has a mechanism of separating only gas in the liquid from the wall surface of the hollow fiber when the liquid passes through the inner side or the outer side of the hollow fiber membrane by applying a negative pressure to the outer side or the inner side of the hollow fiber membrane. The chemical analyzer is used as a device for measuring body fluid components such as blood and urine, and is widely used in an examination room, an examination center, and the like of a hospital.

In a conventional chemical analyzer, for the purpose of miniaturizing the entire system and preventing deterioration in performance of a degassing unit in a degassed water storage tank, there has been proposed a device which enables removal of dissolved gas in pure water by heating pure water and maintaining the temperature of the pure water taken from the outside at a temperature slightly higher than a use temperature in a degassing unit formed around a preheat tank (PTL 1). However, in this method, in order to sufficiently cope with the increase in the speed of the system, a storage tank was required to store a large amount of degassed water, which made it difficult to achieve the miniaturization of the entire system.

In order to cope with the increase in the speed of this system, it has been proposed to use a hollow fiber degassing module having a mechanism in which a hollow fiber membrane of a silicone resin is formed, and by applying a negative pressure to the outer side of the hollow fiber membrane, only gas in the liquid is separated from the wall surface of the hollow fiber when the liquid passes through the inner side of the hollow fiber membrane (PTL 2).

### CITATION LIST

### PATENT LITERATURE

PTL 1: JPS63-165761A
PTL 2: WO 2020/261659

### SUMMARY OF INVENTION

### TECHNICAL PROBLEM

In recent years, amidst the changing environment surrounding healthcare, there is a strong demand for chemical analyzers to provide high-quality data, support rapid examination, and improve examination efficiency. However, there is a problem in that air bubbles in the reverse osmosis (RO) water used in the analysis reduce measurement accuracy.

To solve this problem, a method of removing dissolved gas in the RO water is effective. Further, as a method in which the removal of dissolved gas can be efficiently performed, there is a method in which the hollow fiber degassing module is incorporated into the chemical analyzer to perform continuous degassing. The performance conditions for the hollow fiber degassing module to be incorporated into the device are as follows: (1) a predetermined degassing performance, (2) a size (small size) mountable on the device, (3) a low pressure loss, and (4) a long life.

However, in the case of the hollow fiber degassing module as described above, since the hollow fiber degassing module is continuously used for a long period of time when installed in the analyzer, volatilized water may accumulate in the vacuum portion or the vacuum path inside the module, and the degassing performance may be lowered. In addition, since the vacuum path is opened periodically, bacteria proliferate and cause deterioration of performance.

An object of the present invention is to provide a chemical analyzer equipped with a hollow fiber degassing module that is compact with low pressure loss, can maintain the original excellent degassing performance even after long periods of continuous use, and can also suppress the proliferation of bacteria and the like.

### SOLUTION TO PROBLEM

According to a first aspect of the present invention, there is provided a chemical analyzer for performing chemical analysis or biochemical analysis of a specimen, including: a degassing unit including a constant temperature tank for maintaining a temperature of a container containing a specimen, and a hollow fiber degassing module for removing dissolved gas contained in constant temperature water in the constant temperature tank, in which the hollow fiber degassing module includes a housing and a hollow fiber membrane disposed in an internal space of the housing, the housing includes a first liquid supply unit for connecting an outside of the housing and an internal space of the hollow fiber membrane to each other, and for supplying the constant temperature water from the outside of the housing to the inside of the hollow fiber membrane, a first liquid discharge unit for connecting the internal space of the hollow fiber membrane and the outside of the housing to each other, and for discharging the constant temperature water degassed from the internal space of the hollow fiber membrane to the outside of the housing, and at least one first gas discharge unit for connecting the internal space of the housing and the outside of the housing to each other, and for depressurizing the internal space of the housing, and at least one heating unit provided at the at least one first gas discharge unit is further provided.

The housing may include a cylindrical body disposed such that an axial direction is substantially vertical, a first lid unit attached to an axially lower end portion of the cylindrical body, and a second lid unit attached to an axially upper end portion of the cylindrical body, the first liquid supply unit may be provided in the first lid unit, and the first liquid discharge unit may be provided in the second lid unit, and the at least one first gas discharge unit may be provided at an outer peripheral portion of the cylindrical body.

The at least one heating unit may be disposed in contact with the cylindrical body and the at least one first gas discharge unit, and at least a part of the cylindrical body and the at least one first gas discharge unit may be heated by the at least one heating unit.

Further, the cylindrical body may have a cylindrical shape disposed such that the axial direction is parallel to a vertical direction, and the at least one first gas discharge unit may be provided in a peripheral wall of the cylindrical body.

Furthermore, the cylindrical body may include a first screw unit where the cylindrical body and the first lid unit are screwed together, and a second screw unit where the cylindrical body and the second lid unit are screwed together.

The hollow fiber degassing module may include a first sealing unit that seals the axially lower end portion of the cylindrical body and a second sealing unit that seals the axially upper end portion of the cylindrical body, and one longitudinal end portion of the hollow fiber membrane may be fixed to the first sealing unit, and the other longitudinal end portion of the hollow fiber membrane may be fixed to the second sealing unit.

According to a second aspect of the present invention, there is provided a chemical analyzer for performing chemical analysis or biochemical analysis of a specimen, including: a degassing unit including a constant temperature tank for maintaining a temperature of a container containing a specimen, and a hollow fiber degassing module for removing dissolved gas contained in constant temperature water in the constant temperature tank, in which the hollow fiber degassing module includes a housing and a hollow fiber membrane disposed in an internal space of the housing, the housing includes a second liquid supply unit for connecting an outside of the housing and an internal space of the housing to each other, and for supplying the constant temperature water from the outside of the housing to the internal space of the housing, a second liquid discharge unit for connecting the internal space of the housing and the outside of the housing to each other, and for discharging the constant temperature water degassed from the internal space of the housing to the outside of the housing, and at least one second gas discharge unit for connecting the internal space of the hollow fiber membrane and the outside of the housing to each other, and for depressurizing the internal space of the hollow fiber membrane, and at least one heating unit provided at the at least one second gas discharge unit is further provided.

The housing may include a cylindrical body disposed such that an axial direction is substantially horizontal, a third lid unit attached to one axial end portion of the cylindrical body, and a fourth lid unit attached to the other axial end portion of the cylindrical body, the second liquid supply unit may be provided in the cylindrical body, and the second liquid discharge unit may be provided in the fourth lid unit, and the at least one second gas discharge unit may be provided in the third lid unit.

The at least one heating unit may be disposed in contact with the third lid unit and the at least one second gas discharge unit, and at least a part of the third lid unit and the at least one second gas discharge unit may be heated by the at least one heating unit.

The at least one second gas discharge unit may be provided at a vertically lower end portion of the third lid unit.

The cylindrical body may include a third screw unit where the cylindrical body and the third lid unit are screwed together, and a fourth screw unit where the cylindrical body and the fourth lid unit are screwed together.

The hollow fiber degassing module may include a third sealing unit that seals the one axial end portion of the cylindrical body and a fourth sealing unit that seals the other axial end portion of the cylindrical body, and one longitudinal end portion of the hollow fiber membrane may be fixed to the third sealing unit, and the other longitudinal end portion of the hollow fiber membrane may be fixed to the fourth sealing unit.

### ADVANTAGEOUS EFFECTS OF INVENTION

According to the present invention, it is possible to provide a chemical analyzer equipped with a hollow fiber degassing module that is compact with low pressure loss, can maintain the original excellent degassing performance even after long periods of continuous use, and can also suppress the proliferation of bacteria and the like.

### BRIEF DESCRIPTION OF DRAWINGS

FIG. 1 is a view schematically illustrating an example of a configuration of a chemical analysis system including a chemical analyzer according to an embodiment of the present invention.
FIG. 2 is a view schematically illustrating an example of a configuration of an internal perfusion type hollow fiber degassing module provided in the chemical analyzer of FIG. 1.
FIG. 3(A) is a partial cross-sectional view illustrating a configuration of a first sealing unit provided at an axially lower end portion of a cylindrical body illustrated in FIG. 2, and FIG. 3(B) is a partial cross-sectional view illustrating a configuration of a second sealing unit provided at an axially upper end portion of the cylindrical body illustrated in FIG. 2.
FIG. 4 is a view illustrating an external perfusion type hollow fiber degassing module provided in the degassing device of FIG. 1.
FIG. 5(A) is a partial cross-sectional view illustrating a configuration of a third sealing unit provided at the axially lower end portion of the cylindrical body illustrated in FIG. 2, and FIG. 5(B) is a partial cross-sectional view illustrating a configuration of a fourth sealing unit provided at the axially upper end portion of the cylindrical body illustrated in FIG. 2.
FIG. 6 is a view illustrating a modification example of the internal perfusion type hollow fiber degassing module of FIG. 2.
FIG. 7 is a block diagram schematically illustrating a modification example of the chemical analyzer illustrated in FIG. 1.
FIG. 8 is a block diagram schematically illustrating a modification example of the chemical analysis system of FIG. 1.
FIG. 9 is a block diagram schematically illustrating a modification example of a (bio)chemical analysis unit illustrated in FIG. 1.

### DESCRIPTION OF EMBODIMENTS

Embodiments of the present invention will be described below. The present invention is not limited to the following embodiments.

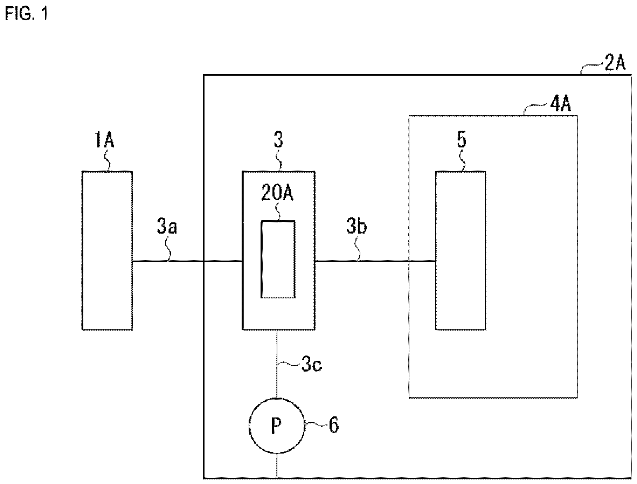

FIG. 1 is a view schematically illustrating an example of a configuration of a chemical analysis system including a chemical analyzer according to an embodiment of the present invention.

As illustrated in FIG. 1, the chemical analysis system includes a pure water supply device 1A and a chemical analyzer 2A. In the chemical analyzer 2A, a degassing device (degassing unit) 3 for degassing the constant temperature water supplied from the pure water supply device 1A and a reaction tank 5 in a (bio)chemical analysis unit 4A are disposed. The pure water supply device 1A and the degassing device 3 are connected to each other by a flow path 3a, and the degassing device 3 and the reaction tank 5 are connected to each other by a flow path 3b.

The degassing device 3 and a vacuum pump 6 are also connected to each other by a flow path 3c. The flow path 3c is configured with, for example, an intake pipe. The dissolved oxygen and air bubbles of the pure water supplied from the pure water supply device 1A to the degassing device 3 are removed by the operation of the vacuum pump. In the present embodiment, the pure water degassed by the degassing device 3 is supplied to the reaction tank (constant temperature tank) 5 via the flow path 3b. As will be described later, the degassing device 3 and the reaction tank 5 form a circulation path, and the pure water degassed by the degassing device 3 may be supplied to the circulation path.

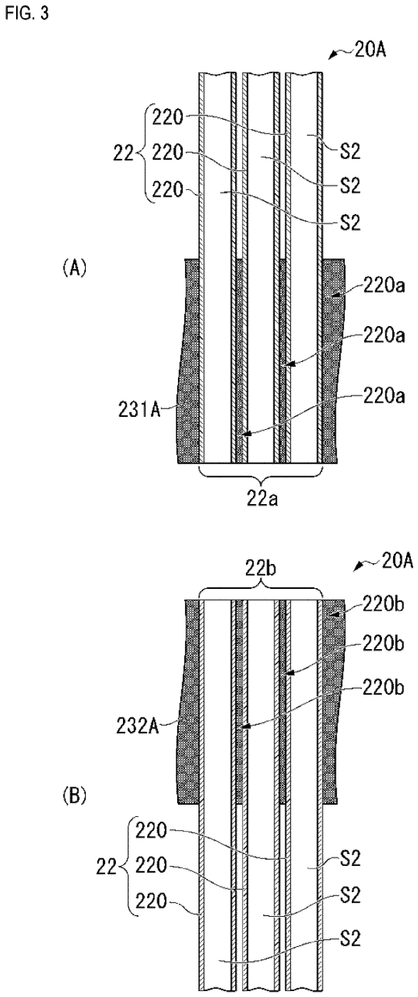

The degassing device 3 includes a hollow fiber degassing module 20A. The hollow fiber degassing module 20A has a hollow fiber membrane bundle 22 in which a plurality of hollow fiber membranes 220 are bundled in a curtain-like shape using vertical threads (refer to FIGS. 3(A) and 3(B)). Hereinafter, for convenience of description, the hollow fiber membrane bundle 22 may be referred to as a "hollow fiber membrane 220". Details of the hollow fiber membranes will be described later.

The chemical analyzer 2A performs chemical analysis or biochemical analysis (hereinafter, "chemical analysis or biochemical analysis" is also referred to as "(bio)chemical analysis") of the specimen. The chemical analyzer 2Ais configured to separate only the gas in the liquid from the liquid through the wall surface of the hollow fiber when the liquid passes through the inner side or the outer side of the hollow fiber membrane by depressurizing the outer side or the inner side of the hollow fiber membrane.

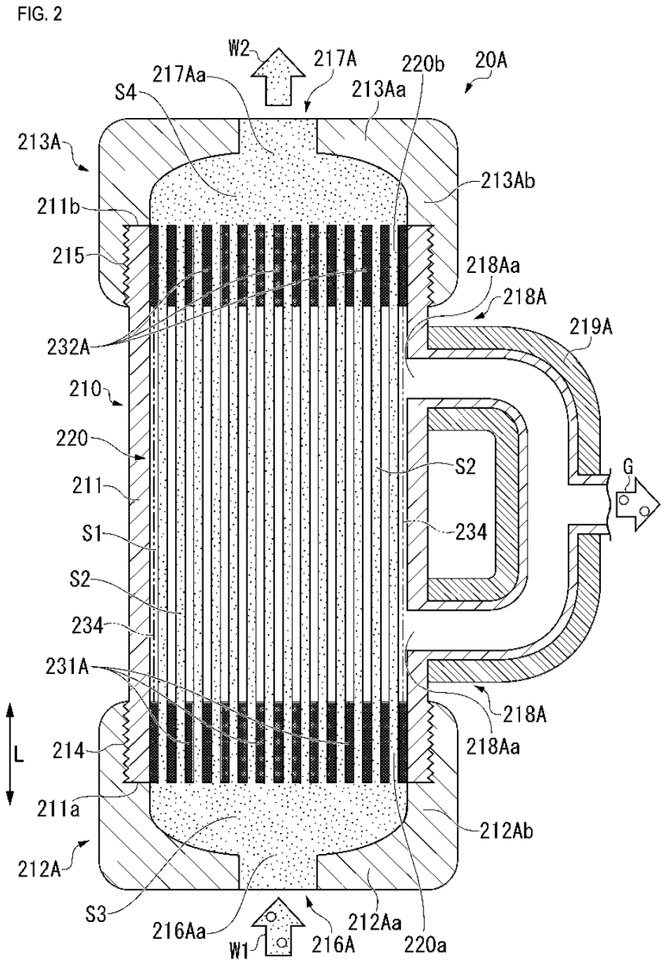

FIG. 2 is a view schematically illustrating an example of a configuration of an internal perfusion type hollow fiber degassing module 20A provided in the chemical analyzer 2A of FIG. 1. In the internal perfusion type hollow fiber degassing module 20A, constant temperature water W1 is supplied to the inner side of the hollow fiber membrane 220, and the outer side of the hollow fiber membrane 220 is depressurized to degas the constant temperature water W1 to generate degassed constant temperature water W2.

The hollow fiber degassing module 20A includes a housing 210 and a hollow fiber membrane 220 disposed in an internal space S1 of the housing 210. The housing 210 includes a cylindrical body 211 disposed such that an axial direction L is substantially horizontal, a first lid unit 212A attached to an axially lower end portion 211a of the cylindrical body 211, and a second lid unit 213A attached to an axially upper end portion 211b of the cylindrical body 211.

The cylindrical body 211 has the internal space S1, and the hollow fiber membrane 220 is accommodated in the internal space S1. The cylindrical body 211 has, for example, a cylindrical shape extending in the axial direction L, and both end portions of the cylindrical body 211 are open. In the present embodiment, the cylindrical body 211 includes a first screw unit 214 where the cylindrical body 211 and the first lid unit 212A are screwed together, and a second screw unit 215 where the cylindrical body 211 and the second lid unit 213A are screwed together. The first lid unit 212A and the second lid unit 213A are fixed to the cylindrical body 211 by the first screw unit 214 and the second screw unit 215, respectively.

The attachment of the first lid unit 212A and the second lid unit 213A to the cylindrical body 211 is not limited to screwing, and can be performed by fitting, bonding, welding, or the like. Either or both of the first lid unit 212A and the second lid unit 213A may be detachably attached to the cylindrical body 211. A sealing unit (not illustrated) such as an O-ring may be provided at the attachment unit of the first lid unit 212A and the second lid unit 213A with respect to the cylindrical body 211. When the sealing unit is formed of an O-ring, it is preferable that the O-ring be disposed in an annular groove unit or the like formed at the axially lower end portion 211a or the axially upper end portion 211b of the cylindrical body 211. The sealing unit can prevent liquid leakage that may occur between the cylindrical body 211 and the first lid unit 212A or the second lid unit 213A. Since the sealing unit does not always come into contact with liquid, the material of the sealing unit is not particularly limited within a range in which the above-described effect can be obtained. From the viewpoint of stain resistance, preferable materials for the sealing unit include polyolefin resins such as a polypropylene resin, the above-described fluororesins, or aromatic polyester resins such as a polycarbonate resin or polyethylene terephthalate.

The first lid unit 212A includes a first wall unit 212Aa having an approximately disc shape provided perpendicularly to the axial direction L, and a second wall unit 212Ab having an approximately ring shape extending parallel to the axial direction L from the peripheral edge of the first wall unit 212Aa. The first lid unit 212A is fixed to the cylindrical body 211 by engaging the inner peripheral surface of the first lid unit 212A with the outer peripheral surface of the cylindrical body 211.

The housing 210 includes a liquid supply unit (first liquid supply unit) 216A for connecting the outside of the housing 210 and an internal space S2 of the hollow fiber membrane 220 to each other, and for supplying the constant temperature water W1 from the outside of the housing 210 to the internal space S2 of the hollow fiber membrane 220. The liquid supply unit 216A includes a liquid supply port 216Aa that is formed, for example, on the first wall unit 212Aa of the first lid unit 212A, for supplying the constant temperature water W1 into the first lid unit 212A. The liquid supply port is not particularly limited, but is, for example, a circular opening in a side view formed on the central axis of the cylindrical body 211. The flow path 3a connected to the degassing device 3 is connected to the liquid supply unit 216A. The connection between the liquid supply unit 216A and the flow path 3a is not particularly limited, and may be performed by screwing or fitting.

The second lid unit 213A includes a first wall unit 213 Aa having an approximately disc shape provided perpendicularly to the axial direction L, and a second wall unit 213Ab having an approximately ring shape extending parallel to the axial direction L from the peripheral edge of the first wall unit 213Aa. The second lid unit 213A is fixed to the cylindrical body 211 by engaging the inner peripheral surface of the second lid unit 213A with the outer peripheral surface of the cylindrical body 211.

The housing 210 includes a liquid discharge unit (first liquid discharge unit) 217A for connecting the internal space S2 of the hollow fiber membrane 220 and the outside of the housing 210 to each other, and for discharging the constant temperature water W2 degassed from the internal space S2 of the hollow fiber membrane 220 to the outside of the housing 210. The liquid discharge unit 217A includes a liquid discharge port 217 Aa that is formed, for example, on the first wall unit 213Aa of the second lid unit 213A, for supplying the constant temperature water W2 to the outside. The liquid discharge port 217Aa is not particularly limited, but is, for example, a circular opening in a side view formed on the central axis of the cylindrical body 211. The flow path 3b connected to the reaction tank 5 is connected to the liquid discharge unit 217A. The connection between the liquid discharge unit 217A and the flow path 3b is not particularly limited, and may be performed by screwing or fitting.

The housing 210 also includes a gas discharge unit (first gas discharge unit) 218A for connecting the internal space S1 of the housing 210 and the outside of the housing 210 to each other, and for depressurizing the internal space S1 of the housing 210. The gas discharge unit 218A includes a gas discharge port 218Aa that is formed, for example, in the cylindrical body 211 for discharging gas G in the internal space S1. The gas discharge unit 218A is provided on the outer peripheral portion of the housing 210. When the cylindrical body 211 has a cylindrical shape disposed such that the axial direction L is parallel to the vertical direction, the gas discharge unit 218A is preferably provided in the peripheral wall of the cylindrical body 211. Thus, moisture generated in the cylindrical body 211 is discharged to the outside from the outer periphery of the cylindrical body 211 via the gas discharge unit 218A. The flow path 3c connected to the vacuum pump 6 is connected to the gas discharge unit 218A. The connection between the gas discharge unit 218A and the flow path 3c is not particularly limited, and may be performed by screwing or fitting.

In the present embodiment, the housing 210 includes two gas discharge units 218A and 218A. The two gas discharge units 218A and 218A are arranged side by side along the axial direction L. Accordingly, the entire internal space S1 of the housing 210 can be efficiently and uniformly depressurized. The housing 210 may have a plurality of gas discharge units 218A, 218A, and the like or one gas discharge unit 218A, depending on the dimension of the housing 210, the dimension of the gas discharge port 218Aa, the capacity of the vacuum pump, and the like.

The chemical analyzer 2A further includes a heating unit 219A provided in the gas discharge unit 218A. In the present embodiment, two heating units 219A and 219A are disposed in the two gas discharge units 218A and 218A. The heating unit 219A includes a heat generation unit such as an electric heating wire and a heat insulation unit that covers the heat generation unit. The heat generation unit and the heat insulation unit are wound around, for example, the outer periphery of the gas discharge unit 218A, and configured to be able to supply power from the outside to the heat generation unit. The heat generation unit generates heat by the power supplied from the outside, and the gas discharge unit 218A and the inside thereof are heated by the heat. Accordingly, the saturated vapor pressure of the gas G in the vicinity of the gas discharge unit 218A increases, and moisture hardly adheres to the gas discharge unit 218A. In the present embodiment, two heating units 219A and 219A are provided, but when the housing 210 includes one gas discharge unit 218A, one heating unit 219A may be provided.

The heating unit 219A may be disposed in contact with the cylindrical body 211 and the gas discharge unit 218A, and at least a part of the cylindrical body 211 and the gas discharge unit 218A may be heated by the heating unit 219A. Accordingly, in addition to the gas discharge unit 218A, at least a part of the cylindrical body 211 is heated, moisture hardly adheres to the gas discharge unit 218A, and moisture becomes less likely to adhere to the inner surface of the cylindrical body 211.

The materials used for the cylindrical body 211, the first lid unit 212A, and the second lid unit 213A, which constitute the housing 210, are not particularly limited. However, from the viewpoint of ease of production, chemical resistance, and stain resistance, polyolefin resins such as a polypropylene resin, and aromatic polyester resins such as a polycarbonate resin or polyethylene terephthalate are preferred. In this case, the cylindrical body 211, the first lid unit 212A, and the second lid unit 213A can be produced by injection molding.

The hollow fiber membrane 220 is a hollow fiber-shaped membrane that allows gases to permeate but does not allow liquids to permeate. The material, membrane shape, membrane form, and the like of the hollow fiber membrane 220 are not particularly limited. From the viewpoint of ease of production, chemical resistance, and stain resistance, the material of the hollow fiber membrane 220 include, for example, polyolefin resins such as polypropylene and poly(4-methylpentene-1), silicone resins, and fluororesins such as PTFE, amorphous fluoropolymers, tetrafluoroethylene-perfluoroalkyl vinyl ether copolymers (hereinafter also referred to as PFA), tetrafluoroethylene-hexafluoropropylene copolymers (hereinafter also referred to as FEP), tetrafluoroethylene-ethylene copolymers (hereinafter also referred to as ETFE), polychlorotrifluoroethylene (hereinafter also referred to as PCTFE), and polyvinylidene fluoride (hereinafter also referred to as PVDF). More specifically, the amorphous fluoropolymer (hereinafter also referred to as "Teflon (registered trademark) AF") may be an amorphous fluororesin containing a copolymer containing tetrafluoroethylene and perfluoro-2,2-dimethyl-1,3-dioxole as a comonomer. Among these, the polyolefin resin, the fluororesin, and the silicone resin are preferable. Examples of the membrane shape (shape of the side wall) of the hollow fiber membrane 220 include a porous membrane, a microporous membrane, and a homogeneous membrane (non-porous membrane) not having a porous membrane. Examples of the membrane form of the hollow fiber membrane 220 include a symmetrical membrane (homogeneous membrane) having a uniform chemical or physical structure of the entire membrane, and a non-symmetrical membrane (heterogeneous membrane) having a membrane chemically or physically different depending on the membrane part. The non-symmetrical membrane (heterogeneous membrane) is a membrane having a non-porous dense layer and a porous material. In this case, the dense layer may be formed anywhere in the membrane, such as the surface layer part of the membrane or the inside of the porous membrane. The heterogeneous membrane includes a composite membrane having a different chemical structure and a multilayer structure membrane having a three-layer structure.

In particular, the heterogeneous membrane using a poly(4-methylpentene-1) resin has a dense layer for blocking liquid, and thus the heterogeneous membrane is particularly preferable for degassing liquids other than water, such as constant temperature water. In addition, in the case of the hollow fiber used for the external perfusion type, the dense layer is preferably formed on the outer surface of the hollow fiber.

The hollow fiber membrane bundle 22 can be formed, for example, in a sheet-like article in which a plurality of hollow fiber membranes 220 are bundled in a curtain-like shape using vertical threads. In this case, for example, the hollow fiber degassing module 20A can be produced by winding the sheet-like article to form the hollow fiber membrane bundle 22 and fixing both end portions of the hollow fiber membrane bundle 22 with a sealing material to be described later. From the viewpoint of ease of production, chemical resistance, and stain resistance, preferable materials for the vertical threads include polyolefin resins such as a polypropylene resin, the above-described fluororesins, or aromatic polyester resins such as a polycarbonate resin or polyethylene terephthalate.

FIG. 3(A) is a partial cross-sectional view illustrating a configuration of a first sealing unit 231A provided at an axially lower end portion 211a of the cylindrical body 211 illustrated in FIG. 2, and FIG. 3(B) is a partial cross-sectional view illustrating a configuration of a second sealing unit 232A provided at an axially upper end portion 211b of the cylindrical body 211 illustrated in FIG. 2.

As illustrated in FIGS. 3(A) and 3(B), the hollow fiber degassing module 20A includes the first sealing unit 231A that seals the axially lower end portion 211a (refer to FIG. 2) of the cylindrical body 211, and the second sealing unit 232A that seals the axially upper end portion 211b (refer to FIG. 2) of the cylindrical body 211. One longitudinal end portion 220a of the hollow fiber membrane 220 is fixed to the first sealing unit 231A, and the other longitudinal end portion 220b of the hollow fiber membrane 220 is fixed to the second sealing unit 232A. That is, one longitudinal end portion 22a of the hollow fiber membrane bundle 22 is fixed to the first sealing unit 231A, and the other longitudinal end portion 22b is fixed to the second sealing unit 232A.

The first sealing unit 231A is filled in the entire region of the hollow fiber membrane 220 other than the internal space S2 in a cross-section perpendicular to the axial direction L of the cylindrical body 211. That is, the first sealing unit 231A is not filled in the internal space S2 of the hollow fiber membrane 220, and is filled between the hollow fiber membranes 220 and between the hollow fiber membrane bundle 22 and the inner wall of the cylindrical body 211.

Similar to the first sealing unit 231A, the second sealing unit 232A is filled in the entire region of the hollow fiber membrane 220 other than the internal space S2 in a cross-section perpendicular to the axial direction L of the cylindrical body 211. That is, the second sealing unit 232A is not filled in the internal space S2 of the hollow fiber membrane 220, and is filled between the hollow fiber membranes 220 and between the hollow fiber membrane bundle 22 and the inner wall of the cylindrical body 211.

The first sealing unit 231A and the second sealing unit 232A are not particularly limited. However, from the viewpoint of ease of production, chemical resistance, and stain resistance, the first sealing unit 231A and the second sealing unit 232A are preferably formed of, for example, a cured product of a curable resin composition containing an epoxy resin or a (meth)acrylic resin, or a polyolefin resin such as polyethylene or polypropylene.

In the present embodiment, the first sealing unit 231A seals the axially lower end portion 211a of the cylindrical body 211 in a state where an internal space S3 of the first lid unit 212A and the internal space S2 of the hollow fiber membrane 220 communicate with each other. The second sealing unit 232A seals the axially upper end portion 211b of the cylindrical body 211 in a state where an internal space S4 of the second lid unit 213A and the internal space S2 of the hollow fiber membrane 220 communicate with each other. That is, the internal space S3 of the first lid unit 212A and the internal space S4 of the second lid unit 213A are partitioned from the internal space S1 of the housing 210 by the first sealing unit 231A and the second sealing unit 232A, respectively, and the internal space S3 of the first lid unit 212A, the internal space S2 of the hollow fiber membrane 220, and the internal space S4 of the second lid unit 213A communicate with each other in this order.

Therefore, the constant temperature water W1 supplied from the liquid supply unit 216A to the internal space S3 of the first lid unit 212A is supplied only to the internal space S2 of the hollow fiber membrane 220, and is prevented from flowing into the internal space S1 of the housing 210. Further, since the gas is exhausted from the gas discharge port 218Aa by the vacuum pump 6, the internal space S1 of the housing 210 is depressurized, preferably to a vacuum. In other words, when the constant temperature water W1 passes through the internal space S2 of the hollow fiber membrane 220, the dissolved gas and air bubbles of the constant temperature water W1 are drawn to the outer side of the hollow fiber membrane 220, and accordingly, the degassing of the constant temperature water W1 is performed.

The degassed constant temperature water W2 flows into the internal space S4 of the second lid unit 213A from only the internal space S2 of the hollow fiber membrane 220, and is supplied from the liquid discharge unit 217A into the reaction tank 5 of the (bio)chemical analysis unit 4A.

As described above, in the hollow fiber degassing module 20A, the liquid contact unit of the constant temperature water W1 and W2 is mainly composed of the first lid unit 212A, the first sealing unit 231A, the hollow fiber membrane 220, the second sealing unit 232A, and the second lid unit 213A. By using the above-described preferable material for each unit, which constitute the liquid contact unit, the chemical resistance can be excellent and the mixing of foreign substances can be suppressed even when used for a long period in the degassing of the constant temperature water.

In the production method of the hollow fiber degassing module 20A, for example, the hollow fiber membrane bundle 22 is formed by bundling a predetermined number of hollow fibers. At this time, an outer support body 234 may be used to cover the hollow fiber membrane bundle 22 with the outer support body 234. Further, the gas discharge port 218Aa is provided in the peripheral wall of the cylindrical body, and a screw unit and/or an O-ring groove unit is provided at both axial end portions of the cylindrical body as necessary to form the cylindrical body 211. In a state where the hollow fiber membrane bundle 22 is accommodated in the cylindrical body 211, one axial end portion 211a of the cylindrical body 211 and one longitudinal end portion 22a of the hollow fiber membrane bundle 22 are fixed with a sealing material to form the first sealing unit 231A, and further, the other axial end portion 211b of the cylindrical body 211 and the other longitudinal end portion 22b of the hollow fiber membrane bundle 22 are fixed with a sealing material to form the second sealing unit 232A. Thereafter, the end surfaces of the first sealing unit 231A and the second sealing unit 232A are cut. Finally, the first lid unit 212A is attached to the one axial end portion 211a of the cylindrical body 211, and the second lid unit 213A is attached to the other axial end portion 211b of the cylindrical body 211, respectively, to form the housing 210. Accordingly, the hollow fiber degassing module 20A including the housing 210 and the hollow fiber membrane 220 is produced.

As described above, according to the present embodiment, in the hollow fiber degassing module 20A, the housing 210 includes the gas discharge unit 218A for connecting the internal space S1 of the housing 210 and the outside of the housing 210 to each other, and for depressurizing the internal space S1 of the housing 210, and the chemical analyzer 2A further includes the heating unit 219A provided in the gas discharge unit 218A. Accordingly, the temperature in the vicinity of the gas discharge unit 218A becomes high, and the gas G containing moisture is easily discharged to the outside from the gas discharge unit 218A without being liquefied. Accordingly, it becomes difficult for water to accumulate in the internal space S1 or the gas discharge unit 218A of the housing 210, and it is possible to maintain the original excellent degassing performance even after long periods of continuous use. In addition, since the humidity of the internal space S1 or the gas discharge unit 218A of the housing 210 can be kept low, bacteria and the like are less likely to be generated even when the internal space S1 or the gas discharge unit 218A are opened after operation, and the proliferation of bacteria and the like in the internal space S1 or the gas discharge unit 218A of the housing 210 can be suppressed.

In a degassing method for removing the dissolved gas contained in the constant temperature water in the constant temperature tank in the chemical analyzer according to the present embodiment, the constant temperature water can be degassed by supplying the constant temperature water to the inner side of the hollow fiber membrane and depressurizing the outer side of the hollow fiber membrane in the hollow fiber degassing module.

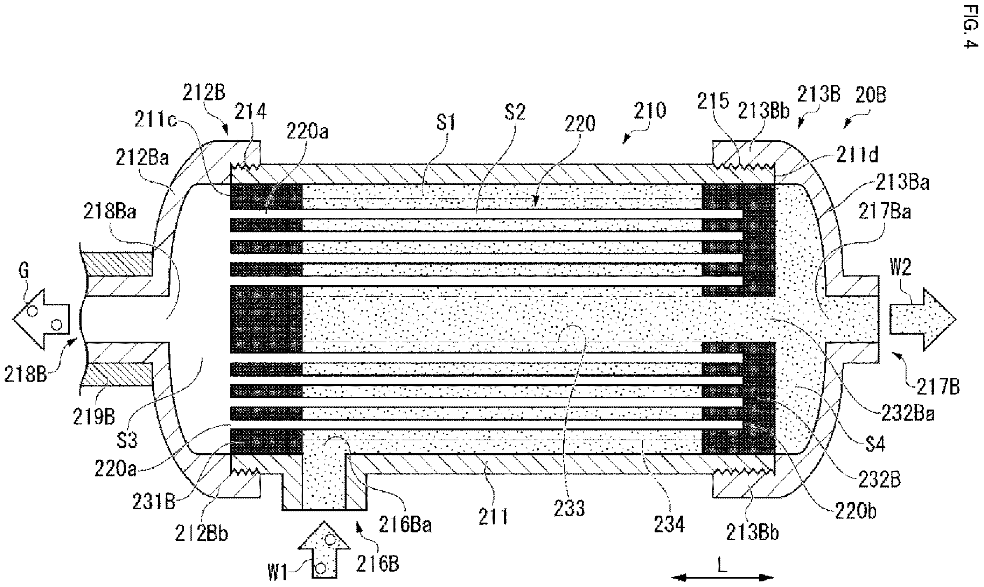

FIG. 4 is a view illustrating an external perfusion type hollow fiber degassing module provided in the degassing device 3 of FIG. 1. The chemical analyzer 2A may include an external reflux type hollow fiber degassing module 20B instead of the internal reflux type hollow fiber degassing module. In the hollow fiber degassing module 20B, the constant temperature water W1 is supplied to the outer side of the hollow fiber membrane 220, and the inner side of the hollow fiber membrane 220 is depressurized to degas the constant temperature water W1 to generate the degassed constant temperature water W2.

The hollow fiber degassing module 20B includes the housing 210 and the hollow fiber membrane 220 disposed in the internal space S1 of the housing 210. The housing 210 includes a cylindrical body 211 disposed such that the axial direction L is substantially horizontal, a third lid unit 212B attached to one axial end portion 211c of the cylindrical body 211, and a fourth lid unit 213B attached to the other axial end portion 211d of the cylindrical body 211.

The cylindrical body 211 has the internal space S1, and the hollow fiber membrane 220 is accommodated in the internal space S1. The cylindrical body 211 has, for example, a cylindrical shape extending in the axial direction L, and both end portions of the cylindrical body 211 are open. In the present embodiment, the cylindrical body 211 includes the first screw unit 214 where the cylindrical body 211 and the third lid unit 212B are screwed together, and the second screw unit 215 where the cylindrical body 211 and the fourth lid unit 213B are screwed together. The third lid unit 212B and the fourth lid unit 213B are fixed to the cylindrical body 211 by the first screw unit 214 and the second screw unit 215, respectively.

The attachment of the third lid unit 212B and the fourth lid unit 213B to the cylindrical body 211 is not limited to screwing, and can be performed by fitting, bonding, welding, or the like. Either or both of the third lid unit 212B and the fourth lid unit 213B may be detachably attached to the cylindrical body 211. A sealing unit (not illustrated) such as an O-ring may be provided at the attachment unit of the third lid unit 212B and the fourth lid unit 213B with respect to the cylindrical body 211. When the sealing unit is formed of an O-ring, it is preferable that the O-ring be disposed in an annular groove unit or the like formed at the one axial end portion 211c or the other axial end portion 211d of the cylindrical body 211. The sealing unit can prevent liquid leakage that may occur between the cylindrical body 211 and the third lid unit 212B or the fourth lid unit 213B. Since the sealing unit does not always come into contact with liquid, the material of the sealing unit is not particularly limited within a range in which the above-described effect can be obtained. From the viewpoint of stain resistance, preferable materials for the sealing unit include polyolefin resins such as a polypropylene resin, the above-described fluororesins, or aromatic polyester resins such as a polycarbonate resin or polyethylene terephthalate.

The third lid unit 212B includes a first wall unit 212Ba having an approximately disc shape provided perpendicularly to the axial direction L, and a second wall unit 212Bb having an approximately ring shape extending parallel to the axial direction L from the peripheral edge of the first wall unit 212Ba. The third lid unit 212B is fixed to the cylindrical body 211 by engaging the inner peripheral surface of the third lid unit 212B with the outer peripheral surface of the cylindrical body 211.

The fourth lid unit 213B includes a first wall unit 213Ba having an approximately disc shape provided perpendicularly to the axial direction L, and a second wall unit 213Bb having an approximately ring shape extending parallel to the axial direction L from the peripheral edge of the first wall unit 213Ba. The fourth lid unit 213B is fixed to the cylindrical body 211 by engaging the inner peripheral surface of the fourth lid unit 213B with the outer peripheral surface of the cylindrical body 211.

The housing 210 includes a liquid supply unit (second liquid supply unit) 216B for connecting the outside of the housing 210 and the internal space S1 of the housing 210 to each other, and for supplying the constant temperature water W1 from the outside of the housing 210 to the internal space S1 of the housing 210. In the present embodiment, the liquid supply unit 216B is provided in the cylindrical body 211. The liquid supply unit 216B includes a liquid supply port 216Ba that is formed, for example, in the cylindrical body 211, for supplying the constant temperature water W1 into the cylindrical body 211. The liquid supply port is not particularly limited, but is a circular opening in a side view formed at the vertically lower end portion of the cylindrical body 211. The flow path 3a connected to the degassing device 3 is connected to the liquid supply port 216Ba. The connection between the liquid supply port 216Ba and the flow path 3a is not particularly limited, and may be performed by screwing or fitting.

The housing 210 also includes a liquid discharge unit (second liquid discharge unit) 217B for connecting the internal space S1 of the housing 210 and the outside of the housing 210 to each other, and for discharging the constant temperature water W2 degassed from the internal space S1 of the housing 210 to the outside of the housing 210. In the present embodiment, the liquid discharge unit 217B is provided in the fourth lid unit 213B. The liquid discharge unit 217B includes a liquid discharge port 217Ba that is formed, for example, on the first wall unit 213Ba of the fourth lid unit 213B, for supplying the constant temperature water W2 to the outside. The liquid discharge port 217Ba is not particularly limited, but is, for example, a circular opening in a side view formed on the central axis of the cylindrical body 211. The flow path 3b connected to the reaction tank 5 is connected to the liquid discharge port 217Ba. The connection between the liquid discharge port 217Ba and the flow path 3b is not particularly limited, and may be performed by screwing or fitting.

Furthermore, the housing 210 includes a gas discharge unit (second gas discharge unit) 218B for connecting the internal space S2 of the hollow fiber membrane 220 and the outside of the housing 210 to each other, and for depressurizing the internal space S2 of the hollow fiber membrane 220. The gas discharge unit 218B includes a gas discharge port 218Ba that is formed, for example, on the first wall unit 212Ba of the third lid unit 212B for discharging the gas G in the internal space S2. The gas discharge port 218Ba is not particularly limited, but is, for example, a circular opening in a side view formed on the central axis of the cylindrical body 211. As a result, moisture generated in the internal space S2 of the hollow fiber membrane 220 and/or in the internal space S3 of the third lid unit 212B is discharged to the outside from the one axial end portion of the hollow fiber membrane 220 via the gas discharge unit 218B. The flow path 3c connected to the vacuum pump 6 is connected to the gas discharge unit 218B. The connection between the gas discharge unit 218B and the flow path 3c is not particularly limited, and may be performed by screwing or fitting.

The chemical analyzer 2A further includes a heating unit 219B provided in the gas discharge unit 218B. The heating unit 219B includes a heat generation unit such as an electric heating wire and a heat insulation unit that covers the heat generation unit. The heat generation unit and the heat insulation unit are wound around, for example, the outer periphery of the gas discharge unit 218B, and configured to be able to supply power from the outside to the heat generation unit. The heat generation unit generates heat by the power supplied from the outside, and the gas discharge unit 218B and the inside thereof are heated by the heat. Accordingly, the saturated vapor pressure of the gas G in the vicinity of the gas discharge unit 218B increases, and moisture hardly adheres to the gas discharge unit 218B. In the present embodiment, one heating unit 219A and 219A is provided, but when the housing 210 includes two gas discharge units 218B and 218B, two heating units 219B and 219B may be provided.

The heating unit 219B may be disposed in contact with the cylindrical body 211 and the gas discharge unit 218B, and at least a part of the cylindrical body 211 and the gas discharge unit 218B may be heated by the heating unit 219B. Accordingly, in addition to the gas discharge unit 218A, at least a part of the cylindrical body 211 is heated, moisture hardly adheres to the gas discharge unit 218A, and moisture becomes less likely to adhere to the inner surface of the cylindrical body 211.

The housing 210 also includes a central pipe 233 disposed on the inside of the cylindrical body 211 to be parallel to the axial direction of the cylindrical body 211, and the outer support body 234 substantially coaxial with the central pipe 233 and disposed between the cylindrical body 211 and the central pipe 233. The central pipe 233, the outer support body 234, and the cylindrical body 211 are arranged in this order from the center toward the outer side in the radial direction of the housing 210. A hollow fiber membrane bundle 22 is disposed between the central pipe 233 and the outer support body 234.

The materials for the cylindrical body 211, the third lid unit 212B, and the fourth lid unit 213B constituting the housing 210 and the material for the hollow fiber membrane 220 may be the same as those of the internal perfusion type hollow fiber degassing module 20A.

The hollow fiber membrane bundle 22 can be formed, for example, in a sheet-like article in which a plurality of hollow fiber membranes 220 are bundled in a curtain-like shape using vertical threads. In this case, for example, the hollow fiber degassing module 20B can be produced by bundling the sheet-like article into a cylindrical shape to form the hollow fiber membrane bundle and fixing both end portions of the hollow fiber membrane bundle bundled into a cylindrical shape with a sealing material. As the material for the vertical thread, the same materials as those of the internal perfusion type hollow fiber degassing module 20A can be used.

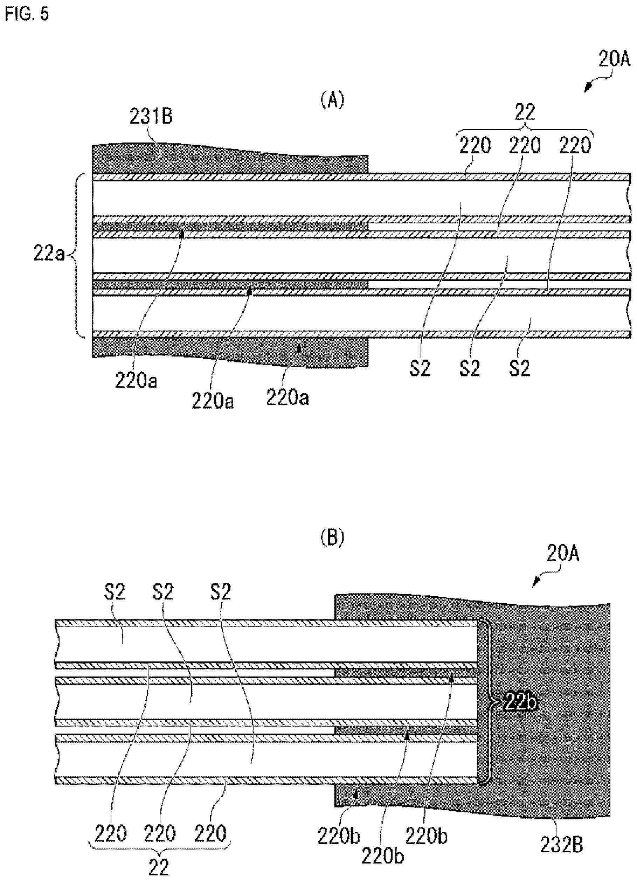

FIG. 5(A) is a partial cross-sectional view illustrating a configuration of a third sealing unit 231B provided at one axial end portion 211c of the cylindrical body 211 illustrated in FIG. 4, and FIG. 5(B) is a partial cross-sectional view illustrating a configuration of a fourth sealing unit 232B provided at the other axial end portion 211d of the cylindrical body 211 illustrated in FIG. 4.

As illustrated in FIGS. 5(A) and 5(B), the hollow fiber degassing module 20B includes the third sealing unit 231B that seals one axial end portion 211c (refer to FIG. 4) of the cylindrical body 211, and the fourth sealing unit 232B that seals the other axial end portion 211d (refer to FIG. 2) of the cylindrical body 211. One longitudinal end portion 220a of the hollow fiber membrane 220 is fixed to the third sealing unit 231B, and the other longitudinal end portion 220b of the hollow fiber membrane 220 is fixed to the fourth sealing unit 232B. That is, one longitudinal end portion 22a of the hollow fiber membrane bundle 22 is fixed to the third sealing unit 231B, and the other longitudinal end portion 22b is fixed to the fourth sealing unit 232B.

The third sealing unit 231B is filled in the entire region of the hollow fiber membrane 220 other than the internal space S2 in a cross-section perpendicular to the axial direction L of the cylindrical body 211. That is, the third sealing unit 231B is not filled in the internal space S2 of the hollow fiber membrane 220, and is filled between the hollow fiber membranes 220 and between the hollow fiber membrane bundle 22 and the inner wall of the cylindrical body 211.

Similar to the third sealing unit 231B, the fourth sealing unit 232B is filled in the entire region of the hollow fiber membrane 220 other than the internal space S2 in a cross-section perpendicular to the axial direction L of the cylindrical body 211. That is, the fourth sealing unit 232B is not filled in the internal space S2 of the hollow fiber membrane 220, and is filled between the hollow fiber membranes 220 and between the hollow fiber membrane bundle 22 and the inner wall of the cylindrical body 211. The fourth sealing unit 232B is provided with a communication port 232Ba that allows the internal space S1 of the housing 210 and the internal space S4 of the fourth lid unit 213B to communicate with each other. The fourth sealing unit 232B closes the other longitudinal end portion 220b of the hollow fiber membrane 220. Therefore, the internal space S2 of the hollow fiber membrane 220 does not communicate with the internal space S4 of the fourth lid unit 213B.

As the material of the third sealing unit 231B and the fourth sealing unit 232B, the same materials as those of the internal perfusion type hollow fiber degassing module 20A can be used.

In the present embodiment, the third sealing unit 231B seals the one axial end portion 211c of the cylindrical body 211 in a state where the internal space S3 of the third lid unit 212B and the internal space S2 of the hollow fiber membrane 220 communicate with each other. The fourth sealing unit 232B seals the other axial end portion 211d of the cylindrical body 211 in a state where the internal space S4 of the fourth lid unit 213B and the internal space S2 of the hollow fiber membrane 220 are closed. That is, the internal space S3 of the third lid unit 212B and the internal space S1 of the housing 210 are partitioned by the third sealing unit 231B, the internal space S4 of the fourth lid unit 213B and the internal space S1 of the housing 210 communicate with each other, and the internal space S3 of the third lid unit 212B and the internal space S2 of the hollow fiber membrane 220 communicate with each other.

Therefore, the constant temperature water W1 supplied from the liquid supply unit 216B to the internal space S1 of the housing 210 is supplied only to the internal space S4 of the fourth lid unit 213B and prevented from flowing into the internal space S3 of the third lid unit 212B. Further, since the gas is exhausted from the gas discharge port 218Ba by the vacuum pump 6, the internal space S2 of the hollow fiber membrane 220 is depressurized, preferably to a vacuum. In other words, when the constant temperature water W1 passes through the internal space S1 of the housing 210, the dissolved gas and air bubbles of the constant temperature water W1 are drawn to the inner side of the hollow fiber membrane 220, and accordingly, the degassing of the constant temperature water W1 is performed.

The degassed constant temperature water W2 flows into the internal space S4 of the fourth lid unit 213B from only the internal space S1 of the housing 210, and is supplied from the liquid discharge unit 217B into the reaction tank 5 of the (bio)chemical analysis unit 4A.

As described above, in the hollow fiber degassing module 20B, the liquid contact unit of the constant temperature water W1 and W2 is mainly composed of the third sealing unit 231B, the hollow fiber membrane 220, the fourth sealing unit 232B, and the fourth lid unit 213B. By using the above-described preferable material for each unit, which constitute the liquid contact unit, the chemical resistance can be excellent and the mixing of foreign substances can be suppressed even when used for a long period in the degassing of the constant temperature water.

In the production method of the hollow fiber degassing module 20B, for example, a sheet-like article in which a plurality of hollow fiber membranes 220 are bundled in a curtain-like shape using vertical threads is wound around the cylindrical central pipe 233 and bundled into a cylindrical shape to form the hollow fiber membrane bundle 22. At this time, an outer support body 234 may be used to cover the hollow fiber membrane bundle 22 with the outer support body 234. Further, the liquid supply port 216Ba is provided in the peripheral wall of the cylindrical body, and a screw unit and/or an O-ring groove unit is provided at both axial end portions of the cylindrical body as necessary to form the cylindrical body 211. In a state where the hollow fiber membrane bundle 22 and the central pipe 233 are accommodated in the cylindrical body 211, the one axial end portion of the cylindrical body 211 and the one longitudinal end portion 22a of the hollow fiber membrane bundle 22 are fixed with a sealing material to form the third sealing unit 231B. Further, the other axial end portion of the cylindrical body 211 and the other longitudinal end portion 22b of the hollow fiber membrane bundle 22 are fixed with a sealing material to form the fourth sealing unit 232B. Thereafter, only the third sealing unit 231B or the end surfaces of the third sealing unit 231B and the fourth sealing unit 232B are cut. Thereafter, the third lid unit 212B is attached to the one axial end portion of the cylindrical body 211 provided with the third sealing unit 231B, and the fourth lid unit 213B is attached to the other axial end portion of the cylindrical body 211 provided with the fourth sealing unit 232B, respectively, to form the housing 210. Accordingly, the hollow fiber degassing module 20B including the housing 210 and the hollow fiber membrane 220 is produced.

As described above, according to the present embodiment, in the hollow fiber degassing module 20B, the gas discharge unit 218B for connecting the internal space S2 of the hollow fiber membrane 220 and the outside of the housing 210 to each other, and for depressurizing the internal space S2 of the hollow fiber membrane 220 is provided, and the chemical analyzer 2A further includes the heating unit 219B provided in the gas discharge unit 218B. Accordingly, the temperature in the vicinity of the gas discharge unit 218B becomes high, and the gas G containing moisture is discharged to the outside from the gas discharge unit 218B without being liquefied. Accordingly, it becomes difficult for water to accumulate in the internal space S2 of the hollow fiber membrane 220 and the internal space S3 and the gas discharge unit 218B of the third lid unit 212B, and it is possible to maintain the original excellent degassing performance even after long periods of continuous use. In addition, since the humidity of the internal space S2 of the hollow fiber membrane 220 and the internal space S3 and the gas discharge unit 218B of the third lid unit 212B can be kept low, bacteria and the like are less likely to be generated even when the internal space S2, the internal space S3, and the gas discharge unit 218B are opened after operation, and the proliferation of bacteria and the like in the internal space S2 of the hollow fiber membrane 220 and the internal space S3 and the gas discharge unit 218B of the third lid unit 212B can be suppressed.

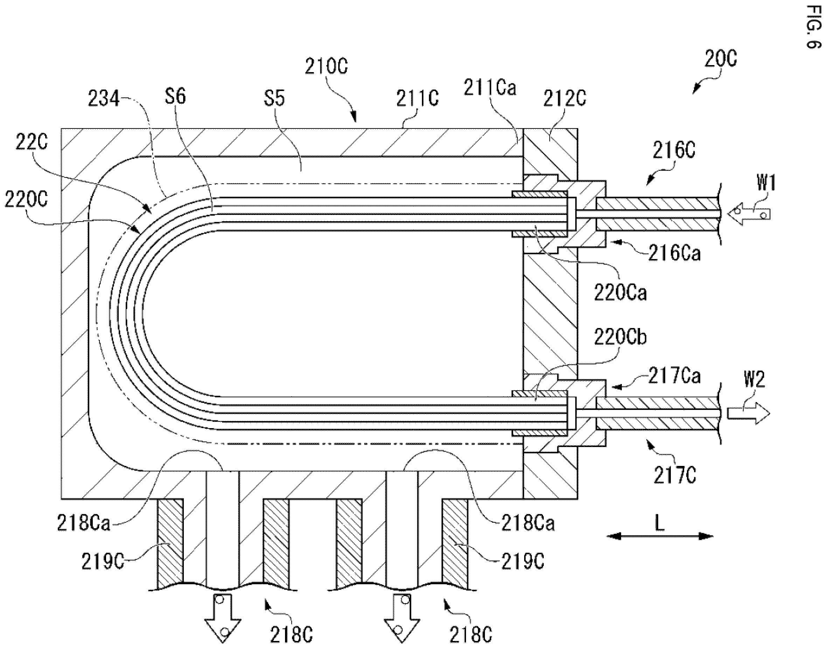

FIG. 6 is a view illustrating a modification example of the hollow fiber degassing module 20A of FIG. 2.

As illustrated in FIG. 6, a hollow fiber degassing module 20C includes a housing 210C and a hollow fiber membrane 220C disposed in an internal space S5 of the housing 210C. The housing 210C includes a cylindrical body 211C disposed such that the longitudinal direction L is substantially horizontal, and a lid unit 212C attached to one longitudinal end portion 211Ca of the cylindrical body 211C.

The housing 210C includes a liquid supply unit (first liquid supply unit) 216C for connecting the outside of the housing 210C and the internal space S5 of the hollow fiber membrane 220C to each other, and for supplying the constant temperature water W1 from the outside of the housing 210C to the inside of the hollow fiber membrane 220C. The liquid supply unit 216C includes a first connector unit 216Ca that is formed, for example, on the lid unit 212C, for supplying the constant temperature water W1 into the first lid unit 212A. One longitudinal end portion 220Ca of the hollow fiber membrane 220C is fixed to the first connector unit 216Ca. The housing 210C may include an outer support body 234C covering a hollow fiber membrane bundle 22C composed of the hollow fiber membranes 220C.

The housing 210C includes a liquid discharge unit (first liquid discharge unit) 217C for connecting an internal space S6 of the hollow fiber membrane 220C and the outside of the housing 210C to each other, and for discharging the constant temperature water W2 degassed from the internal space S5 of the hollow fiber membrane 220C to the outside of the housing 210C. The liquid discharge unit 217C includes a second connector unit 217Ca that is formed, for example, on the lid unit 212C, for supplying the constant temperature water W1 into the first lid unit 212A. The other longitudinal end portion 220Cb of the hollow fiber membrane 220C is fixed to the second connector unit 217Ca.

The housing 210C also includes a gas discharge unit (first gas discharge unit) 218C for connecting the internal space S5 of the housing 210C and the outside of the housing 210C to each other, and for depressurizing the internal space S5 of the housing 210C. The gas discharge unit 218C includes a gas discharge port 218Ca that is formed, for example, in the cylindrical body 211C for discharging the gas G in the internal space S5. The gas discharge unit 218C is provided at a vertically lower end portion of the housing 210C. When the cylindrical body 211C has a cylindrical shape disposed such that the longitudinal direction L is parallel to the horizontal direction, the gas discharge unit 218C is preferably provided at the vertically lower end portion of the peripheral wall of the cylindrical body 211.

The chemical analyzer 2A further includes a heating unit 219C provided in the gas discharge unit 218C. The heating unit 219C may be disposed in contact with the cylindrical body 211C and the gas discharge unit 218C, and at least a part of the cylindrical body 211C and the gas discharge unit 218C may be heated by the heating unit 219C. The configuration of the heating unit 219C may be the same as that of the heating unit 219B.

According to the present configuration, it becomes difficult for water to accumulate in the internal space S5 or the gas discharge unit 218C of the housing 210C, and it is possible to maintain the original excellent degassing performance even after long periods of continuous use. In addition, since the humidity of the internal space S5 or the gas discharge unit 218C of the housing 210C can be kept low, bacteria and the like are less likely to be generated even when the internal space S5 or the gas discharge unit 218C is opened after operation, and the proliferation of bacteria and the like in the internal space S5 or the gas discharge unit 218C of the housing 210 can be suppressed.

In a degassing method for removing the dissolved gas contained in the constant temperature water in the constant temperature tank in the chemical analyzer according to the present embodiment, the constant temperature water can be degassed by supplying the constant temperature water to the outer side of the hollow fiber membrane and depressurizing the inner side of the hollow fiber membrane in the hollow fiber degassing module.

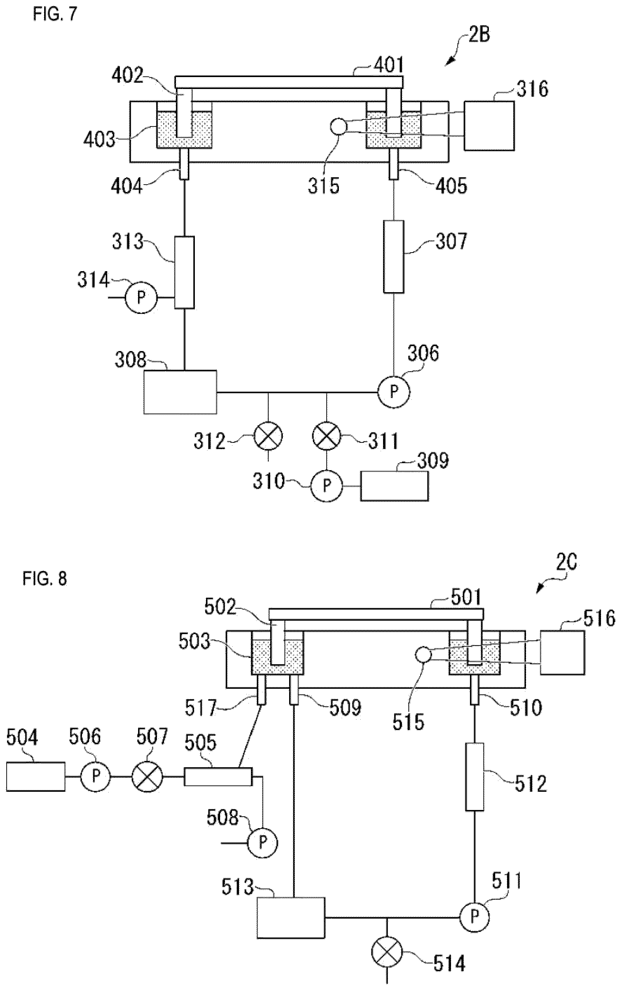

FIG. 7 is a block diagram illustrating a modification example of the chemical analyzer 2A illustrated in FIG. 1.

As illustrated in FIG. 7, a chemical analyzer 2B includes a reaction disk 401, a reaction container 402, a reaction tank 403, and a circulation pump 306. The reaction container 402 attached to the circumference of the circular reaction disk 401 is immersed in the liquid maintained in the similarly circular reaction tank 403. The liquid in the reaction tank 403 is constantly circulated by the circulation pump 306 installed between a discharge pipe 404 and a supply pipe 405, and the temperature of the liquid is controlled by the on/off control of a heater 307. A path including the circulation pump 306 and the heater 307 between the discharge pipe 404 and the supply pipe 405 constitutes a hot water circulation path. Accordingly, the reaction solution maintained inside the reaction container 402 is maintained at an optimal temperature (for example, 37°C) for the reaction.

The hot water circulation flow path may be provided with a cooling unit 308 for cooling the constant temperature water when the temperature of the constant temperature water in the reaction tank 403 becomes too high. A water supply tank 309 and a water supply pump 310 are connected to the hot water circulation flow path, and the supply of pure water from the water supply tank 309 is controlled by the water supply pump 310 and a water supply valve 311. Further, a waste liquid valve 312 is provided in the hot water circulation flow path, and the constant temperature water is discharged as waste liquid to the outside of the flow path when the high temperature water circulating in the reaction tank 403 is exchanged. Further, in the hot water circulation flow path, a degassing device 313 having the hollow fiber degassing module 20A or 20B is provided, and the dissolved gas in the constant temperature water supplied into the degassing device 313 is degassed by the operation of a vacuum pump 314.

In the chemical analyzer 2B, the reaction solution obtained by mixing the sample and the reagent maintained in the reaction container 402 passes through the bundle of light emitted from the light source lamp 315, and the transmitted light is measured by the multi-wavelength photometer 316 to perform qualitative and quantitative analysis of the specific component in the sample.

FIG. 8 is a block diagram schematically illustrating a modification example of the chemical analysis system of FIG. 1.

As illustrated in FIG. 8, a chemical analyzer 2C includes a reaction disk 501, a reaction container 502, a reaction tank 503, a water supply tank 504, and a water supply pump 506. The reaction container 502 attached to the circumference of the circular reaction disk 501 is immersed in the constant temperature water maintained in the similarly circular reaction tank 503. The reaction tank 503 is supplied with the constant temperature water from the water supply tank 504. A degassing device 505 having the hollow fiber degassing module 20A or 20B is provided on the flow path between the water supply tank 504 and the reaction tank 503, and the supply of the constant temperature water is controlled by the water supply pump 506 and the water supply valve 507. The dissolved gas in the constant temperature water supplied into the degassing device 505 is degassed by the operation of a vacuum pump 508 and supplied from a supply pipe 517 to the reaction tank 503.

On the other hand, the constant temperature water in the reaction tank 503 is constantly circulated by a circulation pump 511 installed between a discharge pipe 509 and a supply pipe 510, and the temperature of the constant temperature water is controlled by the on/off control of a heater 512. A path including the circulation pump 511 and the heater 512 between the discharge pipe 509 and the supply pipe 510 constitutes a hot water circulation path. Accordingly, the reaction solution maintained inside the reaction container 502 is maintained at an optimal temperature (for example, 37°C) for the reaction.

The hot water circulation flow path may be provided with a cooling unit 513 for cooling the constant temperature water when the temperature of the constant temperature water in the reaction tank 503 becomes too high. Further, a waste liquid valve 514 is provided in the hot water circulation flow path, and the constant temperature water is discharged as waste liquid to the outside of the flow path when the constant temperature water circulating in the reaction tank 503 is exchanged.

In the chemical analysis system, the reaction solution obtained by mixing the sample and the reagent maintained in the reaction container 502 passes through the bundle of light emitted from a light source lamp 515, and the transmitted light is measured by a multi-wavelength photometer 516 to perform qualitative and quantitative analysis of the specific component in the sample.

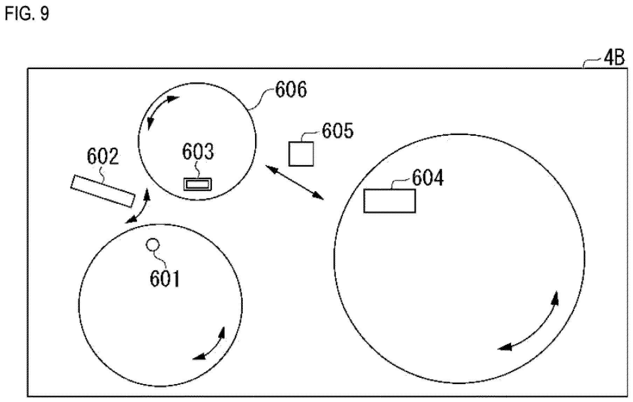

FIG. 9 is a block diagram schematically illustrating a modification example of the (bio)chemical analysis unit 4A illustrated in FIG. 1.

As illustrated in FIG. 9, a (bio)chemical analysis unit 4B may include a specimen container 601, a specimen dispensing mechanism 602, a reaction container 603, a reagent container 604, and a reagent dispensing mechanism 605. In the (bio)chemical analysis unit 4A, for example, the specimen sent from the specimen container 601 to the reaction container 603 via the specimen dispensing mechanism 602, and the reagent sent from the reagent container 604 to the reaction container 603 via the reagent dispensing mechanism 605 can be mixed and stirred. The reaction container 603 is kept at a constant temperature by the constant temperature water stored in a reaction tank 606. On a flow path for supplying the constant temperature water to the reaction tank 606, a degassing device (not illustrated) including the hollow fiber degassing module 20A or 20B is provided, and the supply of the constant temperature water is controlled.

The chemical analyzer of the above-described embodiment may include a control unit (not illustrated) configured with an information processing device or the like including a CPU, memory, I/O, a microcomputer, a latch, and the like, and automatic analysis and diagnosis programs and data stored in the memory. By using those, information necessary for the operation of the chemical analyzer and the analysis operation thereof can be processed or integrally controlled by the CPU.

### Examples

Examples of the present invention will be described below. The present invention is not limited to the following examples.

### (Examples 1, 2, 4, and 5)

An internal perfusion type hollow fiber degassing module having the same structure as the hollow fiber degassing module of FIG. 2 was prepared. A heater was used as the heating unit. Table 1 shows the material of the hollow fibers, the model of the hollow fiber degassing module, the name of the manufacturer, the perfusion system, the water vapor permeation amount, the position of the vacuum line, and whether the vacuum line was heated used in each example.

### (Examples 3 and 6)

An external perfusion type hollow fiber degassing module having the same structure as the hollow fiber degassing module of FIG. 5 was prepared.

### [Presence or Absence of Water Accumulation in Module and Vacuum Line]

By using the hollow fiber degassing module of each example, the test operation was performed under conditions of a circulation flow rate of 500 ml/min, a degree of vacuum of 10, 20 kPa (abs), and a temperature of 25.5 ± 0.1°C. After 1 day, 3 days, and 7 days, the presence or absence of occurrence of water accumulation in the module and the presence or absence of occurrence of water accumulation in the vacuum line (gas discharge line) were observed visually.

### [Evaluation of Degassing Performance]

In the evaluation of the degassing performance, the case where the dissolved oxygen concentration of the RO water in the hollow fiber degassing module was in the range of 7.0 ppm or less was evaluated as excellent "A", the case where the dissolved oxygen concentration in the RO water was in the range of 7.0 to 8.0 ppm was evaluated as slightly poor "B", and the case where the dissolved oxygen concentration in the RO water was in the range of 8.0 ppm or more was evaluated as poor "C". The results are shown in Tables 1 to 3.

**[Table 1]**

| | | | | | | | | | Water accumulation in module | | |
|---|---|---|---|---|---|---|---|---|---|---|---|
| | Hollow fiber material | Hollow fiber degassing module | Manufacturer | Perfusion system | 10 kPa Water vapor permeation amount (ml/h) | 20 kPa Water vapor permeation amount (ml/h) | Vacuum line position | Heating of vacuum line | 1 day later | 3 days later | 7 days later |
| Example 1 | PP | P02-PC2×7N2S | Cobetter | Internal perfusion | 0.66 | 0.54 | Outer periphery (side) of cylindrical body | Present | Absent | Absent | Absent |
| Example 2 | Silicone | M60-4500×100-F | NAGASE | Internal perfusion | 0.18 | 0.12 | Outer periphery (side) of cylindrical body | Present | Absent | Absent | Absent |
| Example 3 | Silicone | M60-4500×100-C | NAGASE | External perfusion | 0.24 | 0.18 | Third lid unit (side) | Present | Absent | Absent | Absent |
| Example 4 | Silicone | ERC-600W | IDEX | Internal perfusion | 1.8 | 1.44 | Outer periphery (side) of cylindrical body | Present | Absent | Absent | Absent |
| Example 5 | PMP | PF-001D | DIC | Internal perfusion | 0.24 | 0.18 | Outer periphery (side) of cylindrical body | Present | Absent | Absent | Absent |
| Example 6 | PMP | EF-AG5 | DIC | External perfusion | 0.12 | 0.09 | Third lid unit (side) | Present | Absent | Absent | Absent |

**[Table 2]**

| | | | | | | | | | Water accumulation in vacuum line | | |
|---|---|---|---|---|---|---|---|---|---|---|---|
| | Hollow fiber material | Hollow fiber degassing module | Manufacturer | Perfusion system | 10 kPa Water vapor permeation amount (ml/h) | 20 kPa Water vapor permeation amount (ml/h) | Vacuum line position | Heating of vacuum line | 1 day later | 3 days later | 7 days later |
| Example 1 | PP | P02-PC2×7N2S | Cobetter | Internal perfusion | 0.66 | 0.54 | Outer periphery (side) of cylindrical body | Present | Absent | Absent | Absent |
| Example 2 | Silicone | M60-4500×100-F | NAGASE | Internal perfusion | 0.18 | 0.12 | Outer periphery (side) of cylindrical body | Present | Absent | Absent | Absent |
| Example 3 | Silicone | M60-4500×100-C | NAGASE | External perfusion | 0.24 | 0.18 | Third lid unit (side) | Present | Absent | Absent | Absent |
| Example 4 | Silicone | ERC-600W | IDEX | Internal perfusion | 1.8 | 1.44 | Outer periphery (side) of cylindrical body | Present | Absent | Absent | Absent |
| Example 5 | PMP | PF-001D | DIC | Internal perfusion | 0.24 | 0.18 | Outer periphery (side) of cylindrical body | Present | Absent | Absent | Absent |
| Example 6 | PMP | EF-AG5 | DIC | External perfusion | 0.12 | 0.09 | Third lid unit (side) | Present | Absent | Absent | Absent |

**[Table 3]**

| | | | | | | | | | Degassing performance | | |
|---|---|---|---|---|---|---|---|---|---|---|---|
| | Hollow fiber material | Hollow fiber degassing module | Manufacturer | Perfusion system | 10 kPa Water vapor permeation amount (ml/h) | 20 kPa Water vapor permeation amount (ml/h) | Vacuum line position | Heating of vacuum line | 1 day later | 3 days later | 7 days later |
| Example 1 | PP | P02-PC2×7N2S | Cobetter | Internal perfusion | 0.66 | 0.54 | Outer periphery (side) of cylindrical body | Present | A | A | A |
| Example 2 | Silicone | M60-4500×100-F | NAGASE | Internal perfusion | 0.18 | 0.12 | Outer periphery (side) of cylindrical body | Present | A | A | A |
| Example 3 | Silicone | M60-4500×100-C | NAGASE | External perfusion | 0.24 | 0.18 | Third lid unit (side) | Present | A | A | A |
| Example 4 | Silicone | ERC-600W | IDEX | Internal perfusion | 1.8 | 1.44 | Outer periphery (side) of cylindrical body | Present | A | A | A |
| Example 5 | PMP | PF-001D | DIC | Internal perfusion | 0.24 | 0.18 | Outer periphery (side) of cylindrical body | Present | A | A | A |
| Example 6 | PMP | EF-AG5 | DIC | External perfusion | 0.12 | 0.09 | Third lid unit (side) | Present | A | A | A |

From the results of Tables 1 to 3, in any of the internal perfusion type hollow fiber degassing modules of Examples 1, 2, 4, and 5, when the gas discharge unit was heated, the water accumulation in the module and the water accumulation in the vacuum line were not observed. In each of the internal perfusion type hollow fiber degassing modules, it was found that the original degassing performance was maintained even 7 days after the start of the test.

In any of the external perfusion type hollow fiber degassing modules of Examples 3 and 6, when the gas discharge unit was heated, the water accumulation in the module and the water accumulation in the vacuum line were not observed. In each of the external perfusion type hollow fiber degassing modules, it was found that the original degassing performance was maintained even 7 days after the start of the test.

### (Comparative Examples 1 to 6)

An internal perfusion type hollow fiber degassing module was prepared in the same manner as in Examples 1 to 6 except that the gas discharge unit was not heated. The results are shown in Tables 1 to 3.

**[Table 4]**

| | | | | | | | | | Water accumulation in module | | |
|---|---|---|---|---|---|---|---|---|---|---|---|
| | Hollow fiber material | Hollow fiber degassing module | Manufacturer | Perfusion system | 10 kPa Water vapor permeation amount (ml/h) | 20 kPa Water vapor permeation amount (ml/h) | Vacuum line position | Heating of vacuum line | 1 day later | 3 days later | 7 days later |
| Comparative Example 1 | PP | P02-PC2×7N2S | Cobetter | Internal perfusion | 0.66 | 0.54 | Outer periphery (side) of cylindrical body | Absent | Present | Present | Present |
| Comparative Example 2 | Silicone | M60-4500×100-F | NAGASE | Internal perfusion | 0.18 | 0.12 | Outer periphery (side) of cylindrical body | Absent | Present | Present | Present |
| Comparative Example 3 | Silicone | M60-4500×100-C | NAGASE | External perfusion | 0.24 | 0.18 | Third lid unit (side) | Absent | Present | Present | Present |
| Comparative Example 4 | Silicone | ERC-600W | IDEX | Internal perfusion | 1.8 | 1.44 | Outer periphery (side) of cylindrical body | Absent | Present | Present | Present |
| Comparative Example 5 | PMP | PF-001D | DIC | Internal perfusion | 0.24 | 0.18 | Outer periphery (side) of cylindrical body | Absent | Present | Present | Present |
| Comparative Example 6 | PMP | EF-AG5 | DIC | External perfusion | 0.12 | 0.09 | Third lid unit (side) | Absent | Present | Present | Present |

**[Table 5]**

| | | | | | | | | | Water accumulation in vacuum line | | |
|---|---|---|---|---|---|---|---|---|---|---|---|
| | Hollow fiber material | Hollow fiber degassing module | Manufacturer | Perfusion system | 10 kPa Water vapor permeation amount (ml/h) | 20 kPa Water vapor permeation amount (ml/h) | Vacuum line position | Heating of vacuum line | 1 day later | 3 days later | 7 days later |
| Comparative Example 1 | PP | P02-PC2×7N2S | Cobetter | Internal perfusion | 0.66 | 0.54 | Outer periphery (side) of cylindrical body | Absent | Present | Present | Present |
| Comparative Example 2 | Silicone | M60-4500×100-F | NAGASE | Internal perfusion | 0.18 | 0.12 | Outer periphery (side) of cylindrical body | Absent | Present | Present | Present |
| Comparative Example 3 | Silicone | M60-4500×100-C | NAGASE | External perfusion | 0.24 | 0.18 | Third lid unit (side) | Absent | Present | Present | Present |
| Comparative Example 4 | Silicone | ERC-600W | IDEX | Internal perfusion | 1.8 | 1.44 | Outer periphery (side) of cylindrical body | Absent | Present | Present | Present |
| Comparative Example 5 | PMP | PF-001D | DIC | Internal perfusion | 0.24 | 0.18 | Outer periphery (side) of cylindrical body | Absent | Present | Present | Present |
| Comparative Example 6 | PMP | EF-AG5 | DIC | External perfusion | 0.12 | 0.09 | Third lid unit (side) | Absent | Present | Present | Present |

**[Table 6]**

| | | | | | | | | | Degassing performance | | |
|---|---|---|---|---|---|---|---|---|---|---|---|
| | Hollow fiber material | Hollow fiber degassing module | Manufacturer | Perfusion system | 10 kPa Water vapor permeation amount (ml/h) | 20 kPa Water vapor permeation amount (ml/h) | Vacuum line position | Heating of vacuum line | 1 day later | 3 days later | 7 days later |
| Comparative Example 1 | PP | P02-PC2×7N2S | Cobetter | Internal perfusion | 0.66 | 0.54 | Outer periphery (side) of cylindrical body | Absent | B | B | B |
| Comparative Example 2 | Silicone | M60-4500×100-F | NAGASE | Internal perfusion | 0.18 | 0.12 | Outer periphery (side) of cylindrical body | Absent | A | B | B |
| Comparative Example 3 | Silicone | M60-4500×100-C | NAGASE | External perfusion | 0.24 | 0.18 | Third lid unit (side) | Absent | A | B | C |
| Comparative Example 4 | Silicone | ERC-600W | IDEX | Internal perfusion | 1.8 | 1.44 | Outer periphery (side) of cylindrical body | Absent | A | C | C |
| Comparative Example 5 | PMP | PF-001D | DIC | Internal perfusion | 0.24 | 0.18 | Outer periphery (side) of cylindrical body | Absent | A | B | B |
| Comparative Example 6 | PMP | EF-AG5 | DIC | External perfusion | 0.12 | 0.09 | Third lid unit (side) | Absent | A | A | B |

From the results of Tables 4 to 6, in any of the internal perfusion type hollow fiber degassing modules of Comparative Examples 1, 2, 4, and 5, when the gas discharge unit was not heated, the water accumulation in the module and the water accumulation in the vacuum line were observed. In any of the internal perfusion type hollow fiber degassing modules of Comparative Examples 1 to 4 and 7 to 10, it was found that the degassing performance deteriorated after 7 days from the start of the test.

In any of the external perfusion type hollow fiber degassing modules of Comparative Examples 3 and 6, when the gas discharge unit was not heated, the water accumulation in the module and the water accumulation in the vacuum line were observed. In any of the external perfusion type hollow fiber degassing modules of Comparative Examples 3 and 6, it was found that the degassing performance deteriorated after 7 days from the start of the test.

### REFERENCE SIGNS LIST

1A: Pure water supply device
2A: Chemical analyzer
2B: Chemical analyzer
2C: Chemical analyzer
3: Degassing device (degassing unit)
3a: Flow path
3b: Flow path
3c: Flow path
4A: (Bio)Chemical analysis unit
4B: (Bio)Chemical analysis unit
5: Reaction tank (constant temperature tank)
6: Vacuum pump
20A: Hollow fiber degassing module
20B: Hollow fiber degassing module
20C: Hollow fiber degassing module
22: Hollow fiber membrane bundle
22a: One longitudinal end portion
22b: The other longitudinal end portion
210: Housing
210C: Housing
211: Cylindrical body
211a: Axially lower end portion
211b: Axially upper end portion
211c: One axial end portion
211C: Cylindrical body
211Ca: One longitudinal end portion
211d: The other axial end portion
212A: First lid unit
212Aa: First wall unit
212Ab: Second wall unit
212B: Third lid unit
212Ba: First wall unit
212Bb: Second wall unit
212C: Lid unit
213A: Second lid unit
213Aa: First wall unit
213Ab: Second wall unit
213B: Fourth lid unit
213Ba: First wall unit
213Bb: Second wall unit
214: First screw unit
215: Second screw unit
216A: Liquid supply unit (first liquid supply unit)
216Aa: Liquid supply port
216B: Liquid supply unit (second liquid supply unit)
216Ba: Liquid supply port
216C: Liquid supply unit (first liquid supply unit)
216Ca: First connector unit
217A: Liquid discharge unit (first liquid discharge unit)
217Aa: Liquid discharge port
217B: Liquid discharge unit (second liquid discharge unit)
217Ba: Liquid discharge port
217C: Liquid discharge unit (first liquid discharge unit)
217Ca: Second connector unit
218A: Gas discharge unit (first gas discharge unit)
218Aa: Gas discharge port
218B: Gas discharge unit (second gas discharge unit)
218Ba: Gas discharge port
218C: Gas discharge unit (first gas discharge unit)
219A: Heating unit (first heating unit)
219B: Heating unit (second heating unit)
219C: Heating unit (first heating unit)
220: Hollow fiber membrane
220a: One longitudinal end portion
220b: The other longitudinal end portion
220C: Hollow fiber membrane
220Ca: One longitudinal end portion
220Cb: The other longitudinal end portion
231A: First sealing unit
231B: Third sealing unit
232A: Second sealing unit
232B: Fourth sealing unit
232Ba: Communication port
303: Reaction tank
306: Circulation pump
307: Heater
308: Cooling unit
309: Water supply tank
310: Water supply pump
311: Water supply valve
312: Waste liquid valve
313: Degassing device
314: Vacuum pump
315: Light source lamp
316: Multi-wavelength photometer
401: Reaction disk
402: Reaction container
403: Reaction tank
404: Discharge pipe
405: Supply pipe
501: Reaction disk
502: Reaction container
503: Reaction tank
504: Water supply tank
505: Degassing device
506: Water supply pump
507: Water supply valve
508: Vacuum pump
509: Discharge pipe
510: Supply pipe
511: Circulation pump
512: Heater
513: Cooling unit
514: Waste liquid valve
515: Light source lamp
516: Multi-wavelength photometer
517: Supply pipe
601: Specimen container
602: Specimen dispensing mechanism
603: Reaction container
604: Reagent container
605: Reagent dispensing mechanism
606: Reaction tank

## Claims

1. A chemical analyzer for performing chemical analysis or biochemical analysis of a specimen, comprising:
a degassing unit including a constant temperature tank for maintaining a temperature of a container containing a specimen, and a hollow fiber degassing module for removing dissolved gas contained in constant temperature water in the constant temperature tank, wherein
the hollow fiber degassing module includes a housing and a hollow fiber membrane disposed in an internal space of the housing,
the housing includes
a first liquid supply unit for connecting an outside of the housing and an internal space of the hollow fiber membrane to each other, and for supplying the constant temperature water from the outside of the housing to the inside of the hollow fiber membrane,
a first liquid discharge unit for connecting the internal space of the hollow fiber membrane and the outside of the housing to each other, and for discharging the constant temperature water degassed from the internal space of the hollow fiber membrane to the outside of the housing, and
at least one first gas discharge unit for connecting the internal space of the housing and the outside of the housing to each other, and for depressurizing the internal space of the housing, and
at least one heating unit provided at the at least one first gas discharge unit is further provided.

2. The chemical analyzer according to Claim 1, wherein
the housing includes
a cylindrical body disposed such that an axial direction is substantially vertical,
a first lid unit attached to an axially lower end portion of the cylindrical body, and
a second lid unit attached to an axially upper end portion of the cylindrical body, the first liquid supply unit is provided in the first lid unit, and the first liquid discharge unit is provided in the second lid unit, and
the at least one first gas discharge unit is provided at an outer peripheral portion of the cylindrical body.

3. The chemical analyzer according to Claim 2, wherein
the at least one heating unit is disposed in contact with the cylindrical body and the at least one first gas discharge unit, and
at least a part of the cylindrical body and the at least one first gas discharge unit are heated by the at least one heating unit.

4. The chemical analyzer according to Claim 2, wherein
the cylindrical body has a cylindrical shape disposed such that the axial direction is parallel to a vertical direction, and
the at least one first gas discharge unit is provided in a peripheral wall of the cylindrical body.

5. The chemical analyzer according to Claim 2, wherein
the cylindrical body includes a first screw unit where the cylindrical body and the first lid unit are screwed together, and a second screw unit where the cylindrical body and the second lid unit are screwed together.

6. The chemical analyzer according to Claim 2, wherein
the hollow fiber degassing module includes a first sealing unit that seals the axially lower end portion of the cylindrical body and a second sealing unit that seals the axially upper end portion of the cylindrical body, and
one longitudinal end portion of the hollow fiber membrane is fixed to the first sealing unit,
and the other longitudinal end portion of the hollow fiber membrane is fixed to the second sealing unit.

7. A chemical analyzer for performing chemical analysis or biochemical analysis of a specimen, comprising:
a degassing unit including a constant temperature tank for maintaining a temperature of a container containing a specimen, and a hollow fiber degassing module for removing dissolved gas contained in constant temperature water in the constant temperature tank, wherein
the hollow fiber degassing module includes a housing and a hollow fiber membrane disposed in an internal space of the housing,
the housing includes
a second liquid supply unit for connecting an outside of the housing and an internal space of the housing to each other, and for supplying the constant temperature water from the outside of the housing to the internal space of the housing,
a second liquid discharge unit for connecting the internal space of the housing and the outside of the housing to each other, and for discharging the constant temperature water degassed from the internal space of the housing to the outside of the housing, and
at least one second gas discharge unit for connecting the internal space of the hollow fiber membrane and the outside of the housing to each other, and for depressurizing the internal space of the hollow fiber membrane, and
at least one heating unit provided at the at least one second gas discharge unit is further provided.

8. The chemical analyzer according to Claim 7, wherein
the housing includes
a cylindrical body disposed such that an axial direction is substantially horizontal,
a third lid unit attached to one axial end portion of the cylindrical body, and
a fourth lid unit attached to the other axial end portion of the cylindrical body,
the second liquid supply unit is provided in the cylindrical body, and the second liquid discharge unit is provided in the fourth lid unit, and
the at least one second gas discharge unit is provided in the third lid unit.

9. The chemical analyzer according to Claim 8, wherein
the at least one heating unit is disposed in contact with the third lid unit and the at least one second gas discharge unit, and
at least a part of the third lid unit and the at least one second gas discharge unit are heated by the at least one heating unit.

10. The chemical analyzer according to Claim 8, wherein
the cylindrical body includes a third screw unit where the cylindrical body and the third lid unit are screwed together, and a fourth screw unit where the cylindrical body and the fourth lid unit are screwed together.

11. The chemical analyzer according to Claim 8, wherein
the hollow fiber degassing module includes a third sealing unit that seals the one axial end portion of the cylindrical body and a fourth sealing unit that seals the other axial end portion of the cylindrical body, and
one longitudinal end portion of the hollow fiber membrane is fixed to the third sealing unit,
and the other longitudinal end portion of the hollow fiber membrane is fixed to the fourth sealing unit.
